# EUROPÄISCHE PATENTSCHRIFT

(11) **EP 0 991 232 B1**
(45) Veröffentlichungstag und Bekanntmachung des Hinweises auf die Patenterteilung: **13.12.2006**
(21) Anmeldenummer: 99113243.2
(22) Anmeldetag: 06.07.1999
(51) Int. Cl.: H04L 12/56

(54) **Verfahren und Vorrichtung zur Verkehrswegebestimmung in einem Kommunikationsnetz**
Method and device for routing in a communications network
Procédé et dispositif d'achéminement dans un réseau de communications

(30) Priorität: 01.10.1998 DE 19845331
(43) Veröffentlichungstag der Anmeldung: 05.04.2000
(73) Patentinhaber: Garderos Software Innovations GmbH, 81667 München (DE)
(72) Erfinder: Ruban, Thomas, 85521 Ottobrunn (DE); Puhl, Alfons, 80802 München (DE); Grimminger, Jochen, 80638 München (DE); Bokaemper, Martin, 91099 Poxdorf (DE)
(74) Vertreter: Berg, Peter

(56) Entgegenhaltungen:
- WO-A-98/41043
- US-A- 5 610 910

## Beschreibung

Die Erfindung betrifft ein Verfahren zur Verkehrswegebestimmung, auch 'Routing' genannt, in paketorientierten Kommunikations- und IP-Datennetzen.

Ein Anbieter eines Informationsdienstes stellt Benutzern in einem paketorientierten Netz Informationen zur Verfügung. Diese können in Form von zum Beispiel Datenbankinhalten oder Webseiten bearbeitet und durchsucht werden.
Um einen Informationsdienst verwenden zu können, muss ein Benutzer in der Regel einen Vermittlungsdienst verwenden. Dieser vermittelt Datenpakete in dem Paketnetz und stellt somit den Zugang zu dem Informationsdienst her.

Bisher kann ein Benutzer zwischen verschiedenen Vermittlungsdiensten wählen. Er kann zu einem Zeitpunkt nur einen Vermittlungsdienst in Anspruch nehmen, alle Datenpakete werden zu diesem Vermittlungsdienst geschickt, der diese dann weiter verteilt. Bei einer Änderung der Verbindung an ein paketorientiertes Datennetz, z. B. zu einem Informationsprovider (wie Compuserve oder AOL) oder zu einem Firmennetz, muss eine neue Datenverbindung aufgebaut werden.

Befindet sich ein Benutzer nicht in dem Netz, zu dem er Zugang erhalten will, so muss er zuerst eine Verbindung zu einem Vermittlungsdienst aufbauen. Dies geschieht zum Beispiel von seinem PC Zuhause mittels eines Modems über das leitungsvermittelte Telefonnetz und mit einem speziellen Protokoll, wie SLIP oder PPP. Will der Benutzer den Vermittlungsdienst wechseln, so muss er die aufgebaute Verbindung beenden und eine neue Verbindung zu einem nächsten Vermittlungsdienst aufbauen.

Alle während der ersten Verbindung eingestellten Parameter gehen somit verloren.

Ein Spezialfall des Zugangsdienstes wird Virtual PoP (Point of Presence) genannt. Dabei wird es von einem Vermittlungsdienst anderen Vermittlungsdiensten gestattet, den gleichen Zugriffspunkt zu verwenden. Die Benutzer dieses zweiten Vermittlungsdienstes bemerken dabei nicht, dass sie sich in einem 'fremden' Zugangspunkt befinden.

US 5,610,910 beschreibt ein Verfahren zum Steuern eines Zugriffs auf Netzdienste unter Verwendung eines Zugriff-Steuermoduls. Das Verfahren umfasst das Extrahieren eines Informationsinhalts auf Datenpaketen bei dem Zugriffsmodul als einem Netzknoten. Außerdem werden eines oder mehrere geeignete Netze entsprechend dem extrahierten Informationsgehalt bestimmt und die Datenpakete entsprechend zu dem einen oder den mehreren geeigneten Netzen geroutet. Das Zugriffsmodul umfasst eine lokale Datenbank oder kann Zugriff auf eine entfernte Datenbank haben, wobei in der entsprechenden Datenbank Informationen gespeichert sind, welche ein Anwenderprofil betreffen.

WO 98/41043 bechreibt ein Zugriffsmodul und Zugriffsverfahren für ein Telefonnetz, bei dem lokalen Geräten ein Zugriff auf öffentliche Telefonnetze ermöglich wird.

Aufgabe der Erfindung ist es, eine Möglichkeit anzugeben, wie ein Benutzer mit einer bestehenden Verbindung zu einem paketorientierten Datennetz zwischen verschiedenen Anbietern von Vermittlungs- und Informationsdiensten wählen kann, ohne diese Verbindung jeweils daran anpassen zu müssen.

Diese Aufgabe wird gelöst durch ein Verfahren gemäß Anspruch 1.

Bei dem erfindungsgemäßen Verfahren der Verkehrswegebestimmung (im Folgenden auch Routing genannt) werden alle Datenpakete im Netz durch einen ausgewählten Netzknoten analysiert und der Pfad der Pakete zur Zieladresse entsprechend der Vorgaben manipuliert. Dabei werden zum ersten Informationen verwendet, die im Datenpaket enthalten sind (durch den Benutzer, welcher auch ein Programm sein kann). Weiterhin werden zweite Informationen zum Routing verwendet, welche dem Netzknoten zur Verfügung stehen, entweder in einer eigenen Datenbank oder auch in mehreren Tabellen, die auch verteilt im Netz existieren können, für ihn abrufbar. Es wird ein für die Anforderungen geeigneter Transferknoten (z. B. Vermittlungsdienst) ermittelt.

So kann der Benutzer verschiedene Vermittlungs- und Informationsdienste anwählen, ohne dass die für ihn sichtbare Verbindung zu irgendeinem Zeitpunkt gelöst werden muss. Es wird sichergestellt, dass ein geeigneter Weg gewählt wird, etwa wenn durch den Benutzer eine erhöhte Sicherheit angefordert wird, oder wenn das Ziel in einem Firmennetz (Corporate Network) durch einen Weg ausschließlich durch dieses Firmennetz erreicht werden soll.

Die Entscheidung über den weiteren Weg des Datenpakets kann zum Beispiel nach folgendem Verfahren getroffen werden:
1. aus dem Datenpaket wird die Quelladresse (oder auch die Absendeadresse des Benutzers, 1. Information) ermittelt,
2. die Quelladresse wird einem Benutzer zugeordnet,
3. die dem Benutzer zugänglichen Anbieter von Vermittlungsdiensten oder Informationsdiensten (2. Information) werden ermittelt,
4. unter den von dem Benutzer zugänglichen Vermittlungsdiensten werden diejenigen ausgewählt, die einen Transport des Datenpaketes zu der gewünschten Zieladresse anbieten,
5. weitere Randparameter werden bestimmt (z. B. Kostenlimits, Minimalqualität), aus zusätzlichen Angaben im Datenpaket oder aus zusätzlichen, dem Benutzer zugeordneten Informationen, die die Auswahl des Vermittlungs- oder Informationsdienstes weiter eingrenzen können,
6. unter den ausgewählten Vermittlungsdiensten wird derjenige ausgesucht, dessen Randparameter mit denen des Benutzers am besten übereinstimmen,
7. dem endgültig ausgewählten Vermittlungsdienst werden damit aus dem Benutzerprofil in der Datenbasis erreichbare Zieladressen zugeordnet, z. B. durch das Setzen von Regeln.

Die Weiterleitung des Paketes kann dann entweder nach dem bisher bereits bekannten Prinzip zum Beispiel mit Hilfe von DNS im Internet geschehen.

Weitere Möglichkeiten werden im Folgenden erläutert.

Die Aufgabe wird auch gelöst durch eine Vorrichtung gemäß Anspruch 19.

Die Vorrichtung enthält
- Mittel (routing engine) zum Empfangen, Verarbeiten und Weiterleiten von Datenpaketen (IP),
- Mittel zum Speichern von Informationen zu Benutzern und Diensten (current user and service information) und
- Mittel zum Verarbeiten der aus dem Datenpaket ermittelten ersten Informationen
   und zusätzlicher zur Verfügung stehender zweiter Informationen über die unterliegenden Routingmöglichkeiten (HW und SW) aus der Routing Engine,
   und dritten gespeicherten Informationen über Benutzer und Dienste,
   (routing information module),
   welche als Schnittstelle zur Routing Engine Informationen austauscht und Konvertierungen der übergebenen Informationen durchführt, soweit notwendig,
wobei diese Informationen Angaben über Vergebührungen z. B. nach Verbindungsende oder Beendigung eines Dienstes, sowie Wegewahlinformationen wie Regeln, Zieladresse, nächster Netzknoten und Art der gewählten Verbindung (z. B. PVC, Tunnelling...) enthalten können, und
- Mittel zur Ermittlung der Abbildung logischer Rechnernamen auf Netzadressen (DNS Proxy Server),
- Mittel zur Verwaltung des Systems (service management module),
- weitere externe Mittel zum Speichern von Informationen zu Benutzern (system management server), welche mit den internen Speichermitteln über Kommunikationsprotokolle, die zur Übertragung von Administrationsdaten geeignet sind (wie etwa RADIUS), Daten austauschen können.

Vorteilhafte Ausgestaltungen und Weiterbildungen sind in den Unteransprüchen angegeben.

Die Datenpakete werden von dem Netzelement zu einem Übergabepunkt, welcher festgelegt ist, gesendet. Dies geschieht üblicherweise auf beliebigen Wegen, etwa mit einem sogenannten Tunnel für Datenpakete über das Netz (wie mit Hilfe des Protokolls GRE, Generic Routing Encapsulation, PPTP, Point-to-Point-tunnelling Protocol oder L2TP, Layer 2 Tunnelling Protocol).

In einer Ausgestaltungsform wird von dem Netzknoten der Weg zu dem festgelegten Knoten ebenfalls festgelegt. Dies ist vorteilhaft, da so erst bestimmte Steuerungskriterien wirksam werden können, etwa Sicherheitskriterien, um zu verhindern, daß Datenpakete durch 'fremde' Netze geleitet werden. Ein solcher Datenpfad kann beispielsweise eine direkte Verbindung sein (PVC, SVC). Der Weg des Datenpakets kann auch durch eine explizite Pfadangabe in jedem Paket realisiert sein (logische Kanäle bei ATM). Bei TCP/IP gibt es dafür das sogenannte 'Source Routing', oder auch RSVP (Resource ReSerVation Protocol, RFC 2205).

Die im Datenpaket enthaltenen und von dem Netzknoten analysierten Zusatz-Informationen können verschiedener Art sein. Neben konkreten Angaben über gewünschte Transfer- und Zielknoten können auch konkrete Pfadangaben dazu gehören. Weiterhin sind Informationen sinnvoll über Quelle und Ziel des Datenpakets und vom Benutzer gewünschte Merkmale der Datenübertragung, wie Kosten, Qualität, Sicherheit, Geschwindigkeit. Diese Informationen können aus dem Inhalt (Kopf) des Datenpaketes explizit oder auch implizit ermittelbar sein. Diese Angaben können zur weiteren Verarbeitung einzeln oder auch in Kombination verwendet werden.

Die Adress-Informationen über Quelle und Ziel eines Datenpaketes können aus mehreren Bestandteilen (Adress-Komponenten) bestehen. Hierunter fallen beispielsweise TCP/IP Adressen, welche durch eine genaue Angabe eines logischen Verbindungsendpunktes (die sogenannte Port-Nummer) erweitert und verfeinert werden können.
Bei anderen Adressierungsarten kann durch eine Adresserweiterung mittels Portnummer auch ein Anschlußpunkt zu einer Hard-Ware-Einrichtung angesteuert werden.

Es gibt verschiedene Gründe, weshalb ein Datenpaket von dem Netzknoten nicht weitergeleitet werden kann.

Zum einen sind die Pakete möglicherweise falsch adressiert. Die angegebene Adresse konnte z. B. vom DNS Proxy nicht korrekt aufgelöst werden, so daß keine Zieladresse und somit kein nächster Netzknoten, zu dem das Datenpaket weiter gereicht werden soll, ermittelt werden kann.

Zum anderen ist die Zieladresse korrekt, aber es konnte von dem zentralen Netzknoten kein Vermittlungsdienst ermittelt werden, der das Datenpaket an die gewünschte Zieladresse übermitteln kann. Eine weitere Fehlermöglichkeit besteht in der Tatsache, daß Benutzer sich zuerst bei einem Vermittlungs- oder Informationsdienst anmelden müssen. Wenn der Benutzer einen Dienst anwählt, zu welchem er keine Benutzungsberechtigung eingetragen hat, können Datenpakete ebenfalls nicht weitergeleitet werden.

Datenpakete, die nicht weitergeleitet werden können, werden in einem paketorientierten Datennetz in der Regel gelöscht ('verworfen').
In einer Ausgestaltungsform der Erfindung werden alle diese nicht auslieferbaren Datenpakete an einen geeigneten Netzknoten ('default') weitergeleitet, oder einen lokalen Prozeß übergeben, der dann eine Reaktion erzeugt. Diese kann zum Beispiel in einer Fehlermeldung bestehen, welche an den Absender zurück geschickt wird, und eine Angabe darüber enthält, warum die Auslieferung der Datenpakete nicht erfolgreich war (negative Bestätigung).
Eine weitere einfache Lösung wäre das Generieren von ICMP (Internet Control Message Protocol) Antworten ('host unreachable').
Weiterhin kann diese Reaktion eine Hilfestellung enthalten, wie der aufgetretene Fehler bei der Datenübertragung vermieden werden könnte (etwa: Anmeldung bei einem Vermittlungsdienst notwendig, Fehler in der Adresse, ...). Diese Hinweise können unter Umständen so ausführlich sein, daß mindestens eine konkrete Aktion angeboten und die Möglichkeit geboten wird, daß der Benutzer sich für eine dieser Aktionen entscheiden, diese ablehnen oder auch eine Alternativreaktion eingeben kann.
Weiterhin kann bei einer unklaren Anforderung (mehrere mögliche Vermittlungsdienste sind 'gleich gut') durch weitere Abfragen durch den Netzknoten eine Auswahl des Vermittlungs-oder Informationsdienstes erreicht werden.

Die Datenpakete, welche als Antwortpakete von der Ziel- zurück an die Quelladresse gesendet werden, sollen den selben festgelegten Knoten (also den selben Vermittlungsdienst) durchlaufen, wie die Originalpakete.
Auf dem Hin- und Rückweg ist es daher auch notwendig, daß von dem Netzknoten die Einträge der Quell- und Zieladressen manipuliert werden. Um eintreffende Datenpakete als Antwortpakete eindeutig zuordnen zu können, werden dabei Aufzeichnungen über die (virtuellen) Verbindungen gespeichert, um die möglicherweise manipulierten Adressen wieder ändern zu können. Dies entspricht den für IP-Datenpakete bekannten Methoden von Network Address Translation (RFC 1631). Darunter versteht man etwa Masquerading, DNAT (Distributed Network Address Translation), NAR (Negotiated Address Reuse) oder RAT (siehe dazu auch Internet Drafts, z. B. unter http://www.ietf.org/).

So kann der Benutzer (also Absender der Original- und Empfänger der Antwortpakete) sicher gehen, daß auch diese Datenpakete den von ihm gewünschten Kriterien entsprechen. Dieses gilt bei den Übertragungskosten und der Übertragungsqualität ebenso wie zur Garantierung einer Übertragungssicherheit.

Falls der Pfad für den Rückweg mit der Quelladresse des ursprünglichen Datenpakets nicht im Netz bekannt ist, jedoch der Vermittlungsdienst selber von 'beiden Seiten' (Absender und Empfänger, Benutzer und Informationsdienst) erreicht werden kann, läßt sich dieser dazu veranlassen, den Weg über Standardprotokolle vom zentralen Netzknoten gezielt zu lernen.

Hiermit ist jeder Teil des Übertragungsweges für das Datenpaket definiert, vom Benutzer zum Vermittlungsdienst, vom Vermittlungsdienst zum Informationsdienst und wieder zurück. Falls der Weg zum Vermittlungsdienst vom zentralen Netzknoten für die Nachrichten dediziert werden soll, ist entweder NAT auf verschiedene Quelladresse möglich, damit der Vermittlungsdienst den zentralen Netzknoten auch auf unterschiedlichen Wegen erreichen kann. Weiterhin kann der zentrale Netzknoten auch direkt mit dem zugrundeliegenden Netz kommunizieren und so Wegeinformationen austauschen.

In einer weiteren Ausführungsform der Erfindung wird es dem Benutzer erlaubt, zwischen verschiedenen Dienstanbieter während einer Verbindung zu einem zweiten Datennetz mit den verschiedenen erreichbaren Datenquellen zu wechseln. Dabei wird der Weg für jedes Datenpaket einzeln bestimmt. Der Benutzer kann zwischen einzelnen Vermittlungsdiensten auswählen, aber es ist jeweils nur ein Vermittlungsdienst für bestimmte Netze oder Informationsdienste aktiv. Dies ist zum Beispiel wichtig für die Vergebührung. Die Vermittlungsdienste für Corporate Networks / Content Provider (allgemein Netze) lassen sich parallel nutzen.

Für eine Erhöhung der Sicherheit ist es auch möglich, die Datenpakete vor dem Versenden mit den üblichen Verschlüsselungsmechanismen durch den Benutzer oder vom Netzelement (SG) zu kodieren. Dies ist vor allem vorteilhaft, wenn sicherheitssensible Datenpakete versendet werden sollen und die zur Verfügung stehenden Datenpfade über Fremdnetze führen.

Ein Benutzer kann sich im Netz bei verschiedenen Diensten (Vermittlungs- oder Informationsdiensten) anmelden und hat dort dann eine Benutzungsberechtigung. Weiterhin können abhängig von der Art des Dienstes zusätzliche Transporteigenschaften für Nachrichten mit Attributen für die einzelnen Benutzer (Quelladresse) angegeben sein.

Dabei können etwa verschiedene Verfügbarkeiten für einen Dienst definiert werden, in der folgenden Weise:
- 'versteckt':
   der Benutzer hat nicht die Möglichkeit, einen Dienst in Anspruch zu nehmen
- 'abonnierbar':
   der Benutzer kann diesen Dienst benutzen, muß sich aber zuvor registrieren
- 'abonniert':
   der Benutzer hat sich bei einem Dienst bereits registriert und kann ihn fortan aktivieren
- 'aktiviert':
   der Benutzer hat derzeit einen Zugang zu dem Dienst geöffnet

Jeder Nutzer hat einen bestimmten Grundzustand in Bezug auf die Vermittlungs- und Informationsdienste. Dieser Grundzustand kann auch als Benutzerprofil bezeichnet werden. Das Profil kann vom Benutzer während einer Sitzung verändert werden.
Dieses Benutzerprofil kann in dem zentralen Netzelement gespeichert sein, es ist aber auch möglich, diese Nutzerprofile aus einer (oder mehrerer verteilter) externen Datenbank bei Bedarf zu holen.

Aufgrund dieses Benutzerprofils kann das zentrale Netzelement schnell ermitteln, welcher Benutzer für welchen Vermittlungsdienst eine Berechtigung besitzt. In dem Fall, daß der Benutzer einen Vermittlungsdienst nicht benutzen darf, kann das zentrale Netzelement ein entsprechendes Datenpaket sofort an einen geeigneten Netzknoten zur Fehlerbehandlung weiterreichen.

Der Zugriff über das Benutzerprofil kann mit einem Passwort (Login) geschützt sein.

Es kann der Fall behandelt werden, daß ein Benutzer einen Vermittlungsdienst nicht benutzen kann, weil er sich noch nicht dort registriert hat.

In beiden Fällen ist es sinnvoll, dem Absender der Datenpakete eine geeignete Benachrichtigung zukommen zu lassen. Diese sollte einen Hinweis darauf enthalten, weshalb eine korrekte Übertragung des Datenpaketes fehlgeschlagen ist.
Zur Durchführung der Anfertigung dieser Fehlermeldungen können die entsprechenden Datenpakete (mindestens eines) auch an ein geeignetes Netzelement weitergeleitet werden, welches die weitere Bearbeitung übernimmt.

Die Fehlerbehandlung kann sehr benutzerfreundlich ausgebildet sein, etwa mit graphischen Oberflächen und mit einer Benutzersteuerung, die Rückmeldungen gibt auch über die mögliche Beseitigung der festgestellten Fehler. Durch ein sogenanntes Helpdesk kann dem Benutzer auch nach dem Absenden von Datenpaketen eine Hilfemöglichkeit geboten werden, die ihm die für ihn möglichen Optionen und Aktionen anzeigt.

Da die Datenpakete alle durch die 'routing engine', die von diesem einen speziellen Netzknoten gesteuert wird, laufen, ist eine Datensammlung zum Zwecke der Gebührenerfassung leicht durchzuführen.
Vergebührt werden können dabei zum einen die Benutzer für die Verwendung der angebotenen Ressourcen. Andererseits können auch die von den Dienstanbietern gesammelten Informationen zur Vergebührung herangezogen werden.
Dabei beziehen sich die dafür üblicherweise verwendeten Werte auf das Volumen der Daten oder die Dauer der für die Übertragung bestehenden Verbindung (inklusive der Belegung von Netzressourcen). Weiterhin kann eine Vergebührung auch erfolgen aufgrund von Angaben über die verwendeten Dienste oder die Anzahl der erfolgreich vermittelten Datenpakete oder anderen Angaben.

Um die Datenpakete von dem speziellen Netzknoten (Routing Engine) zu dem festgelegten Knoten (Übergabepunkt bzw. Vermittlungdienst) zu leiten, muß ein Weg festgelegt werden. Dieses kann in verschiedener Art geschehen:
- mit Hilfe von Methoden von NAT,
- 'Encapsulation', also Einkapselung der Datenpakete, z. B. mit GRE (Generic Routing Encapsulation, RFC 1701), auch angewendet bei 'Tunnelling', wie mit den Protokollen PPTP (Point to Point tunneling Protocol, Microsoft) oder L2TP (Layer 2 Tunneling Protocol, eine Erweiterung des PPP Protokolls),
- mit PVC oder SVC.

Zusätzlich zu den intern gespeicherten Informationen über Authentifizierung, Zugriff, Benutzerprofil oder Vergebührung in einer Datenbank (z. B. UMS, User Management System) kann es auch externe Datenbanken geben, die so geartete Informationen netzweit zur Verfügung stellen.
Da es sich um sicherheitssensible Daten handeln kann, sind an das Zugriffsprotokoll von dem zentralen Netzknoten auf diese externe Datenbasis erhöhte Anforderungen bezüglich der Datensicherheit zu stellen. Ein dafür geeignetes Zugriffsprotokoll ist RADIUS (Remote Authentification Dial-In User Service, RFC 2138) oder LDAP (Lightweight Directory Access Protocol, RFC 1777).

In einer weiteren Ausführungsform kann der Benutzer selber die in der Datenbasis enthaltenen Informationen, etwa sein Benutzerprofil, modifizieren. Dafür muß eine Schnittstelle bereitgestellt werden, über die er mit der geeigneten Oberfläche auf die Daten zugreifen kann.
Hierfür sind bereits viele Lösungen bekannt. Eine Möglichkeit ist das bereits vielfach verwendete http-Protokoll (hypertext transfer protocol) mit den üblichen Webbrowsern (Netscape, Mosaic, Microsoft Explorer, ...) als Benutzeroberfläche.
Es sind auch geänderte Versionen dieses Protokolls oder andere geeignete Protokolle (z. B. IP V6, auch für Voice over IP zu verwenden) denkbar, auch auf anderen Endgeräten des Benutzers, wie Mobiltelefone (mit oder ohne elektronischen Organizer, wie etwa der NOKIA Communicator) oder Palmpilots, welche eine geringe Speicherkapazität und eine kleine Bedienoberfläche haben.

Über diese Schnittstelle kann auch eine Hilfemaschine für den Benutzer zugreifbar werden. Diese kann anhand von den zugänglichen Informationen und weiteren Abfragen von und zum Benutzer eine korrekte Weiterleitung der Datenpakete vereinfachen.
Die Hilfemöglichkeit kann in verschiedenen Ausführungen realisiert werden.

Der wesentliche Vorteil der Erfindung besteht darin, daß mittels des modularen Aufbaus eine Verwendung von vielen Standardkomponenten (teilweise in modifizierter Form) möglich ist. Dies vereinfacht und beschleunigt die Realisierung.

Im folgenden wird die Erfindung anhand von Ausführungsbeispielen erläutert. Dabei zeigen
- Figur 1: einen möglichen schematischen Aufbau der Vorrichtung zur Verkehrswegebestimmung eines Datenpakets,
- Figur 2: eine schematische Darstellung der möglichen Datenpfade zwischen zwei seperaten Kommunikationsnetzen mit Vermittlungsdiensten und Informationsdiensten,
- Figur 3: eine schematische Darstellung eines Kommunikationsnetzes mit der Sitzung eines Benutzers
- Figur 4: eine ausführlicherer Aufbau eines Beispielnetzes mit einzelnen Netzkomponenten, und
- Figur 5a und 5b: ein Ablaufdiagramm, welches das Zusammenspiel der einzelnen Komponenten der Vorrichtung anhand eines einfachen Szenarios beschreibt.

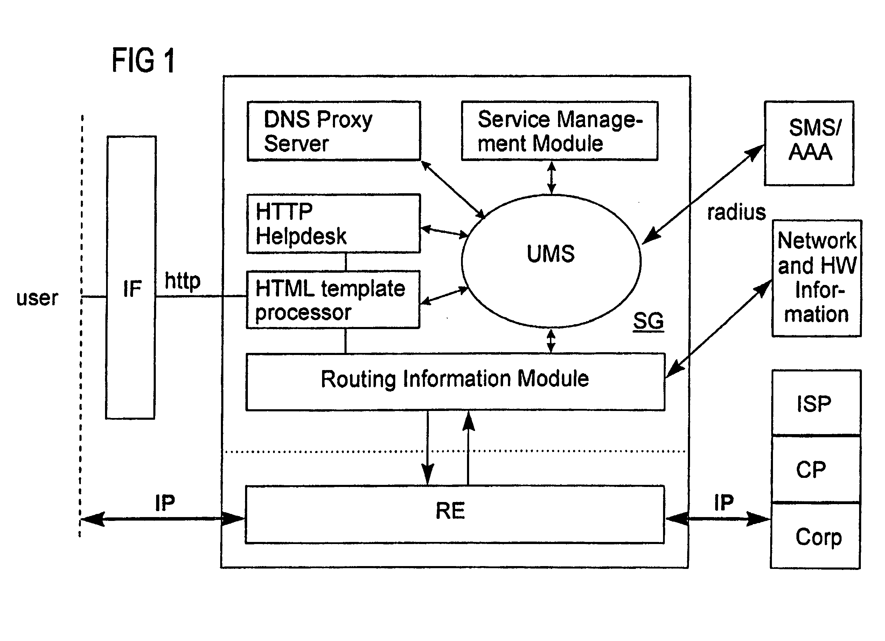

Die Figur 1 zeigt den möglichen schematischen Aufbau einer Vorrichtung (SG) zur Verkehrswegebestimmung eines Datenpakets (IP). Der Aufbau zeigt nicht die Minimal-Konfiguration, verschiedene Komponenten sind nur zur Erhöhung der Benutzerfreundlichkeit vorgesehen, sind jedoch nicht erforderlich für die Funktionsweise der Vorrichtung an sich.

Ganz links (S) befindet sich ein Benutzer oder eine Anwendung, die Datenpakete erzeugt oder bekommt und diese in das Netz weiterleiten möchte. Dafür übergibt sie diese Datenpakete (IP) an eine 'Routing Engine' (RE), welche die Aufgabe hat, diese Datenpakete zu empfangen, zu verarbeiten und später in geeigneter Weise weiterzuleiten. Die 'Routing Engine' kann in der Vorrichtung in verschiedener Weise enthalten sein, etwa im Kernel eines Betriebssystems (wie LINUX) oder auch als seperater 'external' Router.

Diese Routing Engine (RE) tauscht Daten aus, mit einem Mittel (Routing Information Module) zur Verarbeitung von ersten Informationen, die es aus den empfangenen Datenpaketen ermittelt, zweiten Informationen über Benutzer und Dienste, welche aus Datenbanken ausgewählt werden können und dritte Informationen, die Angaben enthalten über Hard- und Software der benutzten zugrundeliegenden Netze und Router.
Es werden zum Beispiel Regeln ausgetauscht, welche aus einem Benutzerprofil ermittelt wurden und den Zugriff zu bestimmten Vermittlungs- oder Informationsdiensten reglementieren. Es können auch nähere Informationen zum Gebrauch von Protokollen zur weiteren Versendung der Datenpakete sein, wie Methoden von NAT (RFC 1631).
Es kann sich weiterhin auch um Vergebührungsdaten handeln.

Die wichtigste Quelle für die zweiten Informationen ist das Speichermittel (current user and service information, UMS). Hier befinden sich die (aktuellen) Benutzerprofile, welche etwa die Regeln enthalten und was noch als Information über Benutzer und Dienste benötigt wird.

Diese Informationsdatenbank kann noch ergänzt werden durch eine oder mehrere externe Speicherquellen, (SMS, System Management System), welche die benötigten Authentifizierungsinformationen liefert (Berechtigungsprofil).
Eine Kommunikation kann hier mittels RADIUS (radius) erfolgen. RADIUS ist ein Protokoll zur Übertragung von Authentifizierungs-, Authorisations-, und Konfigurations- Information zwischen einem Vermittlungsdienst der seine Verbindungen authentifizieren möchte und einem (verteilten) Authentifizierungs Server.

Die Daten, welche im (UMS) gespeichert sind, können in einer erweiterten Ausführungsform auch von den Benutzern geändert werden. Dies geschieht über eine Schnittstelle (IF), die z. B. von einem HTML 'template processor', realisiert als JAVA Script ('Servlet', 'Applet') generiert wird. In diesem Beispiel wird zur Kommunikation mit dem Benutzer http und HTML verwendet, inklusive einer graphischen Bedienoberfläche wie Netscape. Dies erhöht die Benutzerfreundlichkeit, ist aber für die Erfindung nicht zwingend notwendig. Es können auch bei Verwendung eines Mobiltelefons als Endgerät die entsprechenden Steuerbefehle verwendet werden.

Zur Adressauflösung (logischer Name zu Netzadresse) der Datenpakete in einem paketorientierten Netz mit TCP/IP wird DNS benötigt. Dies kann in anderen Netzen ein entsprechender anderer Dienst sein. Der hierfür vorgesehene DNS Proxy verteilt dabei eintreffende DNS Anfragen entsprechend der gespeicherten Regeln über Benutzer und Dienste an die eigentlich zuständigen DNS Server im Netz.

Ein weiteres, nicht zwingend notwendiges Modul bietet dem Benutzer eine Hilfemöglichkeit (Helpdesk). Dabei ist es zweckmäßig, die selbe Benutzeroberfläche zu verwenden wie zur Änderung der Informationen.
Die Hilfefunktion kann dabei in, dem Fachmann bekannter Weise ausgebildet sein.

Sobald das Datenpaket (IP) in der beschriebenen Weise analysiert und bearbeitet wurde, kann es weitergeleitet werden zur Zieladresse. Das Ziel kann direkt ein Informationsdienst (CP, Content Provider) oder in ein Firmennetz (Corp, Corporate Network) sein.
Soll das Datenpaket in ein anderes Kommunikationsnetz gesendet werden, so ist ein Übergang über einen Vermittlungsdienst (ISP, Internet Service Provider) notwendig.

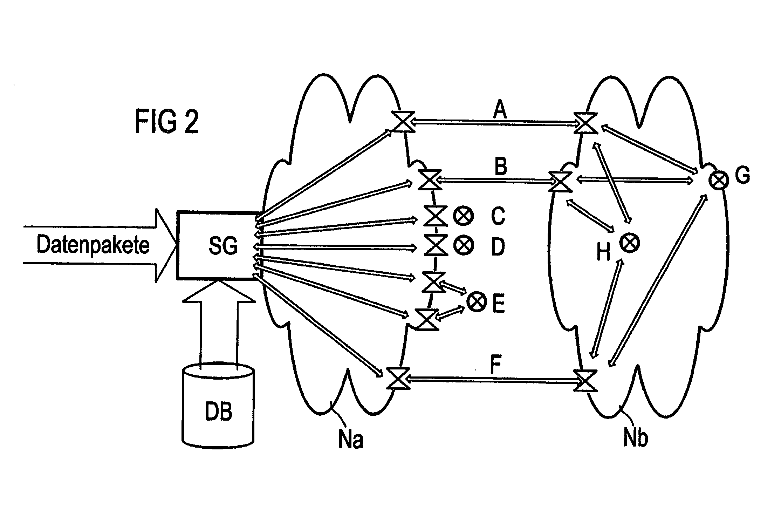

Figur 2 zeigt einen schematischen Aufbau zweier Datennetze (Na und Nb) sowie ein Netzelement (SG), über welches Datenpakete von Benutzern in das eine und/oder andere Datennetz übertragen werden und die Datenpfade, welche die Datenpakete zu den einzelnen Diensten nehmen.

Die Datenpakete werden vom Netzelement (SG) empfangen. Mittels des bereits beschriebenen Verfahrens und zusätzlichen Informationen aus einer Datenbank (DB) wird der weitere Weg in dem ersten Netz (Na) ermittelt. Die Datenpakete können etwa per Encapsulation zu einem der zur Verfügung stehenden Vermittlungsdienste (A - F) weitergeleitet werden.
Dabei wird unterschieden zwischen Diensten direkt am Übergabepunkt (Informationsdienste, C - E) und Dienste entfernt vom Übergabepunkt (A, B, F, auch Internet Service Provider, ISP, genannt).

Die Vermittlungsdienste ermöglichen den Zugang zu Informationsdiensten (G, H) in einem zweiten Kommunikationsnetz (Nb). Dabei kann ein Informationsdienst über mehrere Vermittlungsdienste erreichbar sein, (G, A, B, F) und ein Vermittlungsdienst mehrere Informationsdienste erreichen (A, G, H). Es kann immer nur ein Vermittlungsdienst zu einem Informationsdienst zu einem Zeitpunkt aktiviert sein.

Ein Informationsdienst ist direkt erreichbar (C, D, E). Zu einem Zeitpunkt kann mehr als ein Informationsdienst aktiviert sein.

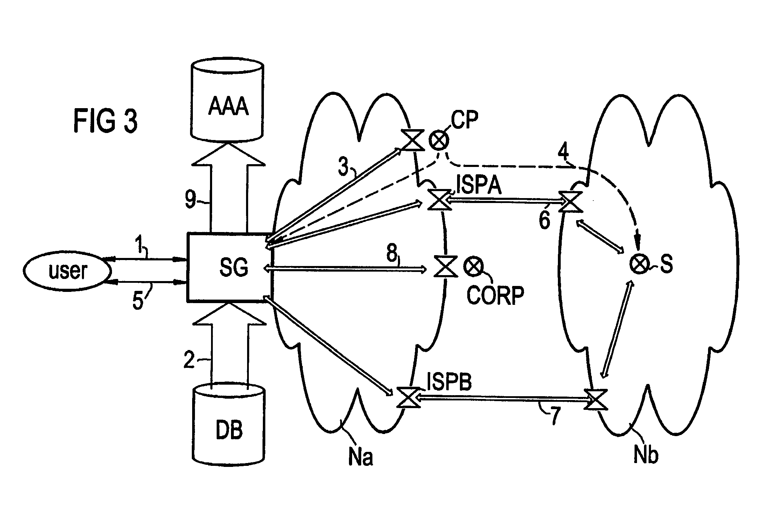

Figur 3 zeigt, ausgehend von Figur 2, den Ablauf einer möglichen 'Sitzung' eines Benutzers.

Ein Benutzer (user) erreicht über ein Netz (zum Beispiel eine Verbindung in einem Telefonnetz) den Netzknoten (SG). Dieser prüft sein Benutzerprofil (2) anhand von Informationen aus den übertragenen Datenpaketen (1) und in einer Datenbank (DB) enthaltenen Informationen.
In seinem Benutzerprofil sind keine sofort zu aktivierenden Dienste enthalten, allerdings einige sowieso für alle frei verfügbaren Informationsanbieter.

Der Benutzer tauscht mit einem dieser frei verfügbaren Dienste (CP, Content Provider), etwa seiner Bank, Datenpakete aus (3). Dies können in unserem Beispiel Informationen über seinen Kontostand, oder Überweisungsaufträge oder ähnliches sein.
Sofern bei dem frei verfügbaren Dienst keine Benutzerkennung erforderlich ist, so kann der Benutzer sich einwählen (anonymous login).
Im Rahmen dieses Datenverkehrs bekommt der Benutzer einige interessante Informationen über (zum Beispiel) Web-Seiten im Internet. Da aber bisher kein Vermittlungsdienst aktiviert ist, ist dieser Informationsdienst für ihn bislang nicht erreichbar (4).
Das Netzelement (SG) wird dem Kunden dann die Möglichkeit gegeben, aus einer Liste von Vermittlungsdiensten einen auszuwählen (5).

Der Benutzer entscheidet sich für einen langsamen und billigen Vermittlungsdienst (ISPA) und danach ist der Datenaustausch mit dem Informationsdienst (S) in dem zweiten Kommunikationsnetz (Nb) möglich (6).

Nach einiger Zeit entdeckt der Benutzer bei dem Informationsdienst (S) ein größeres Dokument, welches er gerne übertragen möchte. Zu diesem Zweck wechselt er zu einem Vermittlungsdienst (ISPB), der schneller aber dafür teurer ist (7). Bei dem Wechsel werden folgende Änderungen durchgeführt:
- der Eintrag für den Standardweg für diesen Benutzer zu dem ersten Vermittlungsdienst (ISPA) wird gelöscht,
- die Firewall-Regeln, welche den Datenpaketen den Weg zu dem ersten Vermittlungsdienst (ISPA) erlauben, werden gelöscht,
- wenn Methoden von NAT auf die Quell-Adresse (IP) für den Benutzer zu dem ersten Vermittlungsdienst (ISPA) angewendet wurden, so werden diese Regeln ebenfalls gelöscht. (NAT ist notwendig bei einer Kette von quellenbezogenen Weiterleitungen. Es wird meist nicht benutzt, wenn Tunneling verwendet wird.)
- neue NAT Regeln für den zweiten Vermittlungsdienst (ISPB) werden eingetragen, falls benötigt,
- neue Firewall-Regeln werden eingetragen, um den Datenpaketen den Weg zu dem zweiten Vermittlungsdienst (ISPB) zu erlauben, und
- ein neuer Standardweg wird eingetragen, für Datenpakete von der Benutzeradresse zu dem zweiten Vermittlungsdienst (ISPB).
Danach kann er mit dem Kopieren des Dokuments beginnen.

Während des Kopierens möchte der Benutzer auf einen weiteren Informationsdienst (Corp) zurückgreifen, zum Beispiel auf sein firmeninternes Netz (8), um dort seinen elektronischen Briefkasten zu überprüfen.
Dieses ist während der Kopierphase problemlos möglich, sobald die Übertragung beendet ist, kann der Benutzer auch die Verbindung über den Vermittlungsdienst (ISPB) beenden, während die Verbindung zu dem Firmennetz (Corp) weiterhin besteht.

Nachdem die Verbindung vom Benutzer aus gelöst wurde, werden die Aktivierungen der Vermittlungsdienste gelöscht und alle Regeln vom Netzelement und/oder der Routing Engine entfernt (d. h. die Aktivierungen der einzelnen Vermittlungsdienste aus seiner Datenbank).
Nach jeder Beendigung eines Dienstes und nach Abbau aller Verbindungen werden gesammelte Informationen über Vergebührung an ein Vergebührungszentrum (AAA) übertragen (9).

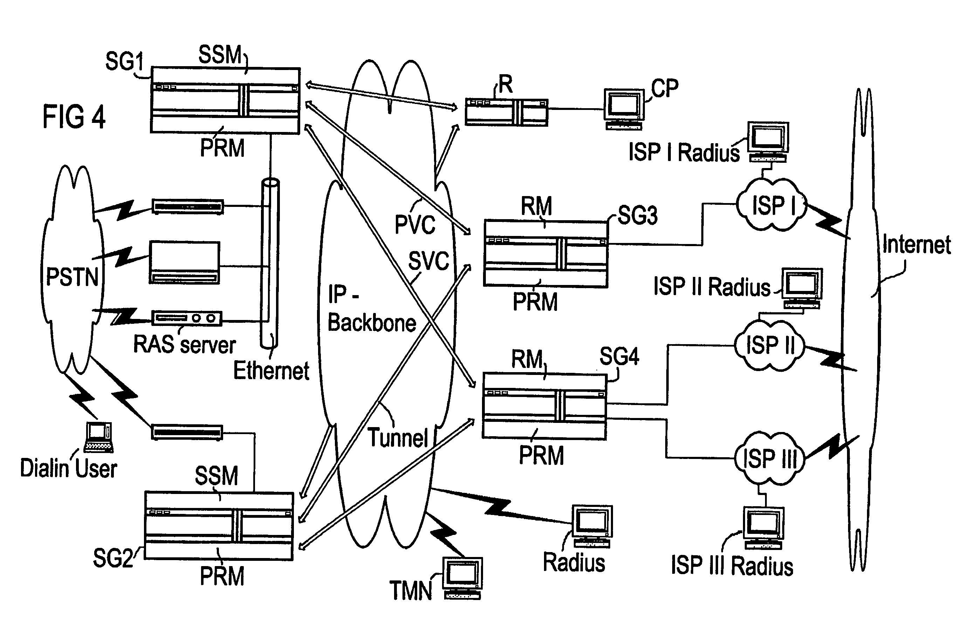

Figur 4 zeigt einen beispielhaften Aufbau eines Netzes von Netzen in welchem der Benutzer (Dialin User) Datenpakete austauschen kann über verschiedene Wege und Vermittlungsdienste mit einem zweiten Kommunikationsnetz (Internet).
Der Benutzer kommuniziert in diesem Beispiel über das Telefonnetz (PSTN), mit welchem er z. B. über ein Modem mit dem PC verbunden wird.

Das Netzelement kann auch als virtueller PoP (Point of Presence, Zugangspunkt zu einem Netz) verwendet werden. Von dem Telefonnetz aus werden die gesendeten Datenpakete zu dem nächstgelegenen Netzelement (Service Gateway und/oder Routing Engine) weitergeleitet werden. Dabei gibt es verschiedene Möglichkeiten, etwa über RAS (Remote Access Service) Server, die es von den verschiedensten Herstellern gibt, wie 3Com, Cisco oder Ascend. Von dort aus weiter (z. B. über Ethernet oder andere Übertragungsprotokolle) werden die Datenpakete zu dem Netzelement (SG1 oder SG2) geleitet, welches mit Hilfe der Informationen wie des Benutzerprofils (SSM, Service Selection Module, PRM, Proxy Radius Module) einen Weg zu einem Übergabepunkt ermittelt. Dieser Weg kann wie in diesem Beispiel über ein paketorientiertes Netz wie ein IP-Backbone Netz gehen. Dabei werden die Datenpakete mittels PVC, SVC Technik oder auch Tunnelling weitergeleitet.

Ist die Zieladresse ein Informationsdienst oder auch ein Firmennetz (CP, Content Provider), so kann das Datenpaket direkt über einen geeigneten Router (R) dorthin geleitet werden.

Soll ein Vermittlungsdienst (ISP) in Anspruch genommen werden, so wird das Datenpaket an ein weiteres Netzelement oder einen Router übergeben (SG3, SG4). Die Ermittlung des weiteren Weges wird von einem Router Module (RM) in dem Netzelement übernommen. Der Austausch von Authentifizierungs-, Abrechnungs- und Authorisierungsdaten erfolgt bspw. mit den Authentifizierungsservern der Vermittlungsdienste (ISP x Radius, Authentication and Accounting).

Über die Vermittlungsdienste (ISP I, ISP II, IPS III) ist dann ein Zugang zu einem weiteren Netz, wie dem Internet möglich, die Datenpakete können weitergeleitet werden.
Die Vergebührung sowie das Sammeln weiterer Informationen, wie Statistikdaten, können dabei zu den Vermittlungsdiensten zugehörige Radius Server übernehmen.

Auch unabhängige Radius Server (Radius) können am IP-Backbone hängen, sie übernehmen zum Beispiel die Authentifizierung und Vergebührung bei Zugriffen auf Informationsdienste (CP), welche nicht über Vermittlungsdienste (ISP) geleitet werden.

Weiterhin kann ein Netzmanagement (TMN) vorgesehen sein. Dieses kann von den Netzbetreibergesellschaften durchgeführt werden.
Dabei können Verbindungen verwaltet und überwacht werden, wenn sie auf Informations- und Vermittlungsdienste mit ihren spezifischen Benutzerprofilen zugreifen.
Die vorhandenen speziellen Netzelemente (Service Gateways) benötigen verschiedene Informationen, welche gemeinsam konfiguriert werden sollten, um Inkonsistenzen zu vermeiden. Je nach Umfang des Netzes und Anzahl der speziellen Netzelemente (Service Gateways) wäre der Konfigurierungsaufwand dann sehr hoch.

Weitere Informationen werden z. B. benötigt über
- Adressen von Tunneling Devices zu den Diensten
- Adressen der Gateways zu dem Backbone
- Adressen von RAS Servern
- Adressen von Netz Management Systemen und System Management Systemen, um Benutzer-, Gebühren- und System-Status-Informationen
- Informationen, die über SNMP gesendet werden sollen
- Informationen, die über Routing Protokolle gesendet werden sollen
- Sicherheitsregeln.

Zusätzlich werden Informationen gesammelt über die angebotene Dienste:
- Adressraum der erreichbaren Server oder Netze
- URL (uniform resource locator) Verbindungen (Links) zu dem Dienst
- Hinweise über den Zustand des Dienstes bezüglich eines Benutzers,
- DNS (Domain Name Service) Server
- wird NAT verwendet,
und vieles mehr.
Die meisten Informationen sind auf allen speziellen Netzelementen identisch, außer Informationen, die sich auf die spezifische Netzumgebung beziehen.
Das Netzmanagement kann diese Informationen zentral speichern und mit den üblichen Mechanismen ändern.
Zur Überwachung des Systems und seiner Komponenten können auch Informationen wie die Auslastung eines Netzknotens oder die Anzahl der Pakete, die von einem Router verarbeitet werden, mit SNMP (Simple Network Management Protocol) zu einem Netzmanagement System wie HP OpenView verwendet werden. Ein Monitor kann zusätzlich an einem eigens dafür vorgesehenen Eingang angeschlossen werden, um so geartete Informationen anzuzeigen.

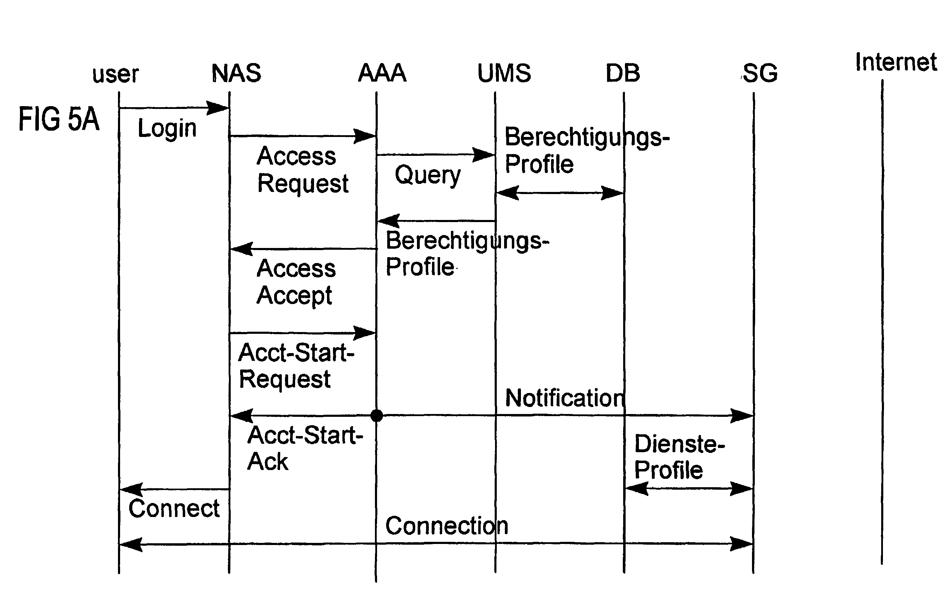

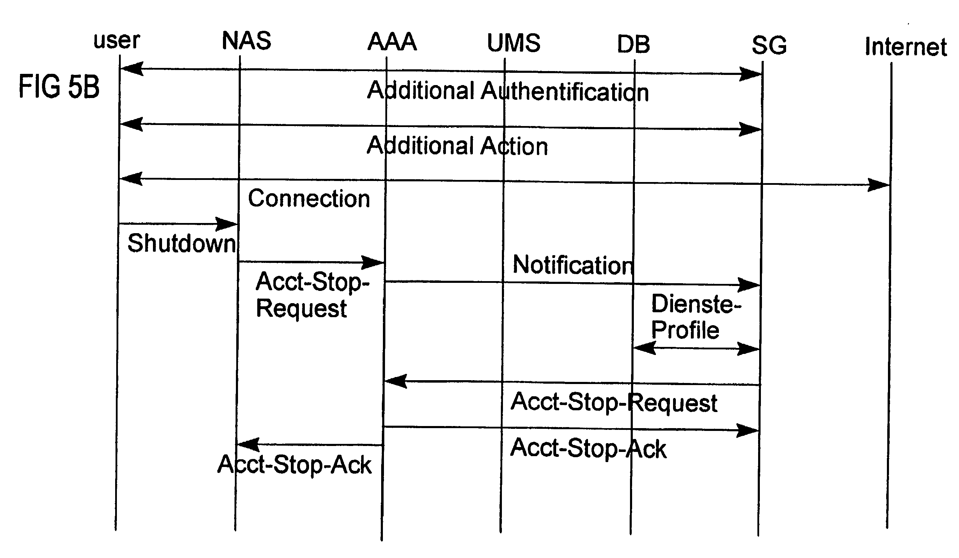

Die Figuren 5a und 5b zeigen ein Ablaufdiagramm, welches die Aufrufe zeigt, die zwischen einem Benutzer (user) und den Netzelemente ablaufen.

Der Benutzer wählt sich über das Telefonnetz (PSTN, ISDN) bei einem Network Address Translation Server (NAS) ein. Er sendet seine Benutzerkennung (login Id) und ein Passwort.

Der NAS Dienst sendet eine Zugriffsaufforderung (Access Request), mittels dem Protokoll RADIUS, zu einem speziellen Server (AAA), welche die 'login Id', das Passwort und eine Caller ID enthält.

Der AAA Server fragt seinerseits in einem User Management System (UMS), welches Benutzerinformationen gespeichert hat, nach (query), um die Identität des Benutzers zu verifizieren. Bei erfolgreicher Abfrage bekommt er ein Benutzerprofil (Berechtigungs-Profile) zurückgeliefert. Ansonsten wird der AAA Server über den Fehlschlag informiert.

Ist die Authentifizierung erfolgreich, meldet das der AAA Server an den NAS Server (*Access Accept*) zusammen mit dem aus der Datenbank ermittelten Berechtigungs- oder auch Authentisierungsprofil, welches auch die Netzadressen (IP-Adresse) enthalten kann, die er zugeteilt bekommt (transparenter user).
Ist die Authentifizierung nicht erfolgreich, wird dies ebenso gemeldet (*Access Reject*).

Nach der erfolgreichen Authentifizierung meldet der NAS Server einige weitere Informationen mittels *(Acct Start* Request) an den AAA Server, wie Adresse, Caller ID, Session ID, welches den Beginn der Aufzeichnungen von Informationen signalisiert, die auch zur Vergebührung benutzt werden.

Der AAA Server informiert gleichzeitig mit diesen, den Benutzer identifizierenden Informationen das spezielle Netzelement (SG) (Notification). Der AAA Server sendet eine Bestätigung an den NAS Server (*Acct-Start-Ack*).

Das spezielle Netzelement (SG) speichert die Angaben über Dienste und Benutzer, die im Benutzerprofil zurückgeliefert wurden (Dienste-Profile). Diese Liste kann auch weitere Adressenangaben für die zukünftige Verarbeitung enthalten. Mit Hilfe dieser Angaben werden die Regeln für Wegewahl (Routing) in geeigneter Weise in dem speziellen Netzelement abgeändert. Damit wird für den Benutzer der Zugriff auf die gewünschten Dienste ermöglicht (also angemeldet oder aktiviert).

Die Aktivierung von Diensten kann durchgeführt werden
- während des Einwählens, wenn die ersten Datenpakete des Benutzers eintreffen, oder
- wenn der Benutzer eine Aktion durchführt (aktivieren oder deaktivieren eines Dienstes) oder
- nach dem Zugriff auf eine spezielle Adresse oder Seite ('Hit').
Dabei werden jeweils *Acct-Start*-Requests gesendet, sowie *Stop-Ack*. Die Änderungen werden jeweils im UMS Server bzw in der Datenbank (DB) gespeichert.

Damit ist eine Verbindung aufgebaut zum Benutzer, der nun Zugriff hat auf das spezielle Netzelement, dessen Daten und die aktivierten und aktivierbaren Dienste (Connect).

Sind für diese Dienste weitere Informationen oder Authentisierungen notwendig, so werden diese jetzt durchgeführt (Additional Authentification, Figur 5b).

Der Benutzer kann auch über das spezielle Netzelement auf Dienste zugreifen. Diese können ihm zum Beispiel mittels einer http-Webseite von dem Netzelement angeboten werden, so daß er nur den entsprechenden Link auf dieser Seite anwählen muß (Additional Action). Dabei können weitere Regeln aus seinem Benutzerprofil verwendet werden.
Ist dies erforderlich, wird nun eine Verbindung zu einem Netz, hier dem Internet, über einen geeigneten Vermittlungsdienst eröffnet bzw. erlaubt.

Die Datenpakete werden anhand der Regeln für die Wegewahl zu ihrem Ziel gesendet. Dabei können von dem speziellen Dienstelement (SG) auch Aufzeichnungen darüber geführt werden über die Benutzung von einzelnen Diensten.

Soll während der Verbindung zu einem zweiten Vermittlungsdienst eine Verbindung aufgebaut werden, kann dies ebenfalls durch das Anwählen des entsprechenden 'Links' auf der 'Homepage' geschehen. Die Konfigurationen für den ersten Dienst werden, wie oben beschrieben, entfernt, falls sich die Dienste gegenseitig ausschließen, die für den neuen Dienst werden eingetragen. Mit *Acct-Stop-Request* und *Acct-Start-Request* können jedesmal beim Schließen eines alten Dienstes und Öffnen eines neuen Dienstes die Aufzeichnungen angehalten bzw. neu gestartet werden.

Sobald der Benutzer die Verbindung löst (Shutdown), indem er z. B. sein Modem ausschaltet, werden die Einträge wieder rückgängig gemacht.
Der NAS Server entdeckt den Verbindungsabbau und informiert den AAA Server *(Acct-Stop-Request).* Dieser wiederum informiert das spezielle Netzelement (Notification), welches daraufhin die entsprechenden Einträge in seinen Tabellen löscht und die Benutzer- und Dienstprofile in die Datenbank (DB) zurückschreibt, sofern sich etwas geändert hat. Um die Aufzeichnungen zu beenden, wird ein *Acct-Stop-Request* für jeden aktiven Dienst ausgesendet und bestätigt (*Acct-Stop-Ack*). Zuletzt erhält der NAS Server ebenfalls eine Bestätigung. Der AAA Server beendet die Aufzeichnungen und schickt eine Bestätigung zurück (*Acct-Stop-Ack*).

### Abkürzungsverzeichnis

- AAA: Authenticating Accounting Access
- ATM: Asyncronous Transfer Mode
- CP: Content Provider
- DB: Datenbank
- DNS: Domain Name Service
- GRE: Generic Routing Encapsulation
- HTML: hypertext markup language
- http: hypertext transfer protocol
- IF: Interface
- IP: Internet Protocol
- ISP: Internet Service Provider
- L2TP: Layer 2 Tunneling Protocol
- NAS: Network Access Service
- NAT: Network Address Translator
- NMS: Network Management System
- POP: Point of Presence
- PPP: Point-to-Point Protocol
- PPTP: Point to Point tunneling Protocol
- PRM: Proxy Radius Module
- PSTN: Public Switched Telephone Network
- PVC: Permanent Virtual Circuit
- RADIUS: Remote Authentification Dial-In User Service
- RAS: Remote Access Service
- RM: Router Module
- SG: Service Gateway
- SLIP: Serial Line Internet Protocol
- SMS: System Management Server
- SNMP: Simple Network Management Protocol
- SSM: Service Selection Module
- SVC: Switched Virtual Circuit
- TMN: Telecommunication Management Network
- UMS: User Management System
- VPoP: Virtual Point of Presence
- WWW: World Wide Web

### Literaturverzeichnis

RFC 1055
   Nonstandard for transmission of IP datagrams over serial lines (SLIP)
   J. Romkey, June 1988
RFC 1171
   Point-to-Point Protocol for the transmission of multiprotocoldatagrams over Point-to-Point links (PPP)
   D. Perkins, CMU, July 1990
RFC 1631
   The IP Network Address Translator (NAT)
   K. Egevang, Cray Communications, P. Francis, NTT
   May 1994
RFC 1701
   Generic Routing Encapsulation (GRE)
   S. Hanks, NetSmiths, Ltd.
   T. Li, D. Farinacci, P. Traina, cisco Systems
   October 1994
RFC 1777
   Lightweight Directory Access Protocol (LDAP)
   W. Yeong, Performance Systems International
   T. Howes, University of Michigan, S. Kille, ISODE Consortium March 1995
RFC 2138
   Remote Authentication Dial In User Service (RADIUS)
   C. Rigney, Livingston, A. Rubens, Merit
   W. Simpson, Daydreamer S. Willens Livingston,
   April 1997
RFC 2205
   Resource ReSerVation Protocol (RSVP)
   R. Braden, Ed., ISI, L. Zhang, UCLA, S. Berson, ISI,
   S. Herzog, IBM Research, S. Jamin, Univ. of Michigan September 1997
DNS und BIND
   Paul Albitz & Cricket Liu
   deutsche Ausgabe, 1. Auflage 1997, O'Reilly Verlag
Internet Engineering Task Force, INTERNET DRAFT
   G. Montenegro, Sun Microsystems, Inc.
   Negotiated Address Reuse (NAR), May 1, 1998
   draft-montenegro-aatn-nar-00.txt
INTERNET DRAFT
   Michael Borella, David Grabelsky, Ikhlaq Sidhu, Brian Petry 3Com Corp.
   Distributed Network Address Translation, April 1998 draft-borella-aatn-dnat-00.txt

## Patentansprüche

1. Verfahren zur Verkehrswegebestimmung in einem IP-Datennetz (IP: Internet Protokoll) oder einem Netz aus Kommunikations- und IP-Datennetzen,
bei dem Datenpakete von einem Netzknoten (SG) im Netz empfangen werden, und
anhand von im Datenpaket enthaltenen ersten Informationen und
durch Zuordnung von diesen ersten Informationen zu zweiten Informationen, die dem Netzknoten (SG) weiterhin zur Verfügung stehen (DB),
für jedes Datenpaket von dem Netzknoten (SG) einzeln ein Weg durch das Netz/die Netze zu einer Zieladresse bestimmt wird, bei dem zumindest einer der auf dem Weg durchlaufenen Netzknoten auf diesem Weg auf Basis der zweiten Information eindeutig festgelegt wird, und
das Datenpaket an den nächsten Netzknoten auf dem ermittelten Weg zur Zieladresse weitergeleitet wird.

2. Verfahren nach Anspruch 1,
**dadurch gekennzeichnet, daß**
der ermittelte Weg des Datenpakets von dem Netzknoten (SG) zu dem festgelegten Knoten (A - F) eindeutig festgelegt wird.

3. Verfahren nach einem der vorherigen Ansprüche,
**dadurch gekennzeichnet, daß**
aus den in dem Datenpaket enthaltenen Informationen mindestens eine der folgenden Angaben ermittelt werden kann:
- Benutzer (Quelladresse),
- Zieladresse,
- Dienstanbieter (Übergabepunkt),
- Qualität,
- Kosten,
- Sicherheit
der gewünschten Übertragung.

4. Verfahren nach einem der vorherigen Ansprüche,
**dadurch gekennzeichnet, daß**
Quelladresse und/oder Zieladresse aus mehreren Adress-Komponenten zusammengesetzt sind.

5. Verfahren nach einem der vorherigen Ansprüche,
**dadurch gekennzeichnet, dass**
die im Datenpaket enthaltene Zieladresse falsch oder unbekannt ist, und
das Datenpaket zu einer speziellen Instanz im Netz gesendet und dort bearbeitet wird.

6. Verfahren nach einem der vorherigen Ansprüche,
**dadurch gekennzeichnet, daß**
die auf ein in diesem Netz von der Quelladresse zur Zieladresse übermittelten Datenpakete abgesendeten Antwortpakete von der Zieladresse an die Quelladresse der gleiche festgelegte Knoten (Übergabepunkt) durchlaufen wird.

7. Verfahren nach einem der vorherigen Ansprüche,
**dadurch gekennzeichnet, daß**
im Datenpaket auf dem Weg von der Quelladresse zur Zieladresse von dem Netzknoten (SG) die Quelladresse geändert wird.

8. Verfahren nach Anspruch 7,
**dadurch gekennzeichnet, daß**
in einem Antwortpaket auf ein ursprüngliches Datenpaket auf dem Weg von der Quelladresse (= ursprüngliche Zieladresse) zur Zieladresse (= geänderte Quelladresse) von dem Netzknoten die korrekte Zieladresse eingetragen wird, also die ursprüngliche Änderung der Quelladresse wieder rückgängig gemacht wird.

9. Verfahren nach Anspruch 6, 7 oder 8,
**dadurch gekennzeichnet, daß**
auf die Datenpakete eine Methode von Network Address Translation (NAT) angewendet wird.

10. Verfahren nach einem der vorherigen Ansprüche,
**dadurch gekennzeichnet, daß**
sich Zieladressen in einem zweiten Kommunikationsnetz (Nb) befinden, welches über einen oder mehrere Zugangspunkte erreichbar ist, wobei
jeweils nur einer dieser Zugangspunkte zu einem Zeitpunkt verwendet werden darf.

11. Verfahren nach einem der vorherigen Ansprüche,
**dadurch gekennzeichnet, daß**
die Zieladresse ein Informationsdienst (CP) ist, bei dem sich ein Benutzer angemeldet haben muß, bevor er diesen verwenden kann, und
daß er jeweils mehrere dieser Informationsdienste zu einem Zeitpunkt verwenden darf.

12. Verfahren nach einem der vorherigen Ansprüche,
**dadurch gekennzeichnet, daß**
die übertragenen Datenpakete verschlüsselt sind.

13. Verfahren nach einem der vorherigen Ansprüche,
**dadurch gekennzeichnet, daß**
zu einer Quelladresse in einem zentralen Datenbestand (DB) Angaben existieren, welche einen Grundzustand in Bezug auf die Benutzungsberechtigung von im Netz vorhandenen Diensten beinhalten.

14. Verfahren nach einem der vorherigen Ansprüche,
**dadurch gekennzeichnet, daß**
ein Benutzer nicht berechtigt ist, einen im Netz vorhandenen Dienst (CP, ISP) zu benutzen und
beim Senden eines Datenpakets des nicht-berechtigten Benutzers dieses Datenpaket an eine spezielle Instanz im Netz gesendet wird, welche eine geeignete Fehlermeldung generiert.

15. Verfahren nach einem der vorherigen Ansprüche,
**dadurch gekennzeichnet, daß**
ein Benutzer nicht berechtigt ist, einen im Netz vorhandenen Dienst (CP, ISP) zu benutzen und
beim Senden eines Datenpakets des nicht-berechtigten Benutzers eine geeignete Fehlermeldung generiert und an den Benutzer zurück gesendet wird.

16. Verfahren nach einem der vorherigen Ansprüche,
**dadurch gekennzeichnet, daß**
ein Benutzer berechtigt ist, einen im Netz vorhandenen Dienst zu benutzen, und
bei diesem Dienst jedoch nicht registriert ist, und beim Senden eines Datenpakets des nicht-registrierten Benutzers dieses Datenpaket an eine spezielle Instanz im Netz gesendet wird, welche eine geeignete Fehlermeldung generiert.

17. Verfahren nach einem der vorherigen Ansprüche,
**dadurch gekennzeichnet, daß**
aufgrund der bei der Verkehrswegewahl im Netzknoten (SG) gesammelten Informationen eine Vergebührung des Benutzers durchgeführt werden kann, aufgrund mindestens eines der folgenden Kriterien: '
- Zeit
- Volumen
- Anzahl der Zugriffe
- verwendete Dienste
- Art der Datenpakete
- Übertragungsqualität.

18. Verfahren nach einem der vorherigen Ansprüche,
**dadurch gekennzeichnet, daß**
aufgrund der bei der Verkehrswegewahl im Netzknoten (SG) gesammelten Informationen eine Vergebührung des Diensteanbieters durchgeführt werden kann, aufgrund mindestens eines der folgenden Kriterien:
- Zeit,
- Volumen
- Anzahl der Zugriffe
- verwendete Dienste
- Art der Datenpakete
- Übertragungsqualität.

19. Vorrichtung zur Verkehrswegebestimmung für Datenpakete in einem IP-Datennetz oder in einem Netz aus Kommunikations-und/oder IP-Datennetzen (SG),
- mit Mitteln (RE) zum Empfangen, Verarbeiten und Weiterleiten der Datenpakete (IP), und
- mit Mitteln zur Speicherung von Zusatzinformationen über Benutzer und/oder vorhandene Dienste in den Netzen (UMS), und
- mit Mitteln zur Speicherung von Verwaltungsinformationen (Service Management Module), und
- mit Mitteln zur Ermittlung der Abbildung logischer Rechnernamen in Netzadressen und umgekehrt (DNS Proxy Server), und
- mit Mitteln zum Treffen einer Verkehrswegebestimmung für jedes einzelne Datenpaket (IP), anhand sowohl der aus dem Datenpaket ermittelten Informationen als auch der gespeicherten Zusatzinformationen (Routing Information Module),
wobei zumindest einer der auf dem Weg durchlaufenen Knoten (Übergabepunkt) auf diesem Weg eindeutig festgelegt ist, und
- mit einer Schnittstelle (IF) zum Modifizieren der gespeicherten Zusatzinformationen.

20. Vorrichtung nach Anspruch 19,
**dadurch gekennzeichnet, daß**
ein eindeutiger Pfad zu dem festgelegten Knoten (Übergabepunkt) durch eine virtuelle Verbindung realisiert ist.

21. Vorrichtung nach einem der Ansprüche 19 oder 20,
**dadurch gekennzeichnet, daß**
ein Zugriff möglich ist auf einen Server, der Authentifizierungsdaten und/oder Zugriffsdaten und/oder Vergebührungsdaten (AAA, SMS) enthält.

22. Vorrichtung nach einem der Ansprüche 19 - 21,
**dadurch gekennzeichnet, daß**
eine Schnittstelle (IF) existiert, über die die gespeicherte Zusatzinformationen über Benutzer und/oder vorhandene Dienste modifiziert werden kann (http).

23. Vorrichtung nach einem der Ansprüche 19 - 22, **gekennzeichnet durch** eine Hilfemöglichkeit für Benutzer, die beim Auftreten von Fehlern während des Zugriffs auf einen Dienst in dem Netz eine Meldung mit Informationen über den aufgetretenen Fehler dem Benutzer zusendet (http Helpdesk).

24. Vorrichtung nach Anspruch 23,
**dadurch gekennzeichnet, daß**
die Hilfemöglichkeit derart ausgestaltet ist, dass beim Auftreten von Fehlern während des Zugriffs auf einen Dienst ein Alternativdienst angeboten wird.

25. Vorrichtung nach einem der Ansprüche 23 oder 24,
**dadurch gekennzeichnet, daß**
die Zugangsmöglichkeit und/oder die Hilfemöglichkeit durch eine Benutzeroberfläche realisiert ist.

26. Vorrichtung nach Anspruch 25,
**dadurch gekennzeichnet, daß**
die Kommunikation mit der Benutzeroberfläche mittels eines geeigneten Protokolls geschieht (http).

## Claims

1. Method for routing in an IP data network (IP: Internet Protocol) or a network made up of communication networks and IP data networks, in which data packets are received by a network node (SG) in the network and, using first information contained in the data packet and by assigning this first information to second information, which is moreover available (DB) to the network node (SG), a path through the network(s) to a target address is determined for each data packet individually by the network node (SG), where at least one of the network nodes passed through on the path is clearly fixed on this path, on the basis of second information, and the data packet is routed at the adjacent network node on the identified path to the target address.

2. Method according to claim 1, **characterised in that** the identified path of the data packet from the network node (SG) to the fixed node (A-F) is clearly fixed.

3. Method according to one of the preceding claims, **characterised in that** from the information contained in the data packet at least one of the following data may be identified:
- user (source address),
- target address,
- service provider (transfer point),
- quality,
- costs,
- security
of the desired transfer.

4. Method according to one of the preceding claims, **characterised in that** the source address and/or target address are made up of a plurality of address components.

5. Method according to one of the preceding claims, **characterised in that** the target address contained in the data packet is incorrect or unknown, and the data packet is sent to a specific entity in the network and processed there.

6. Method according to one of the preceding claims, **characterised in that** the answer packet sent to a data packet transmitted in this network from the source address to the target address is passed from the target address to the source address of the same fixed node (transfer point).

7. Method according to one of the preceding claims, **characterised in that** in the data packet on the path from the source address to the target address of the network nodes (SG), the source address is altered.

8. Method according to claim 7, **characterised in that** in an answer packet on an original data packet on the path from the source address (=original target address) to the target address (=altered source address) of the network node, the correct target address is entered, i.e. the original alteration of the source address is again cancelled.

9. Method according to claim 6, 7 or 8, **characterised in that** a method of network address translation (NAT) is used on the data packets.

10. Method according to one of the preceding claims, **characterised in that** target addresses are located in a second communication network (Nb) which may be accessed via one or more access points, respectively only one of these access points being allowed to be used at a time.

11. Method according to one of the preceding claims, **characterised in that** the target address is an information service (CP), in which a user has to be registered before the user may use said information service and **in that** the user is respectively allowed to use a plurality of these information services at one time.

12. Method according to one of the preceding claims, **characterised in that** the transferred data packets are encrypted.

13. Method according to one of the preceding claims, **characterised in that** data exist at a source address in a central database (DB) which have a normal status relative to the user authorisation of services available in the network.

14. Method according to one of the preceding claims, **characterised in that** a user is not authorised to use a service (CP, ISP) available in the network and when sending a data packet of the unauthorised user, this data packet is sent to a specific entity in the network which generates an appropriate error message.

15. Method according to one of the preceding claims, **characterised in that** a user is not authorised to use a service (CP, ISP) available in the network and when sending a data packet of the unauthorised user an appropriate error message is generated and is sent back to the user.

16. Method according to one of the preceding claims, **characterised in that** a user is authorised to use a service available in the network but is not registered with this service and when sending a data packet of the unregistered user, this data packet is sent to a specific entity in the network, which generates an appropriate error message.

17. Method according to one of the preceding claims, **characterised in that**, due to the information collected during routing in the network node (SG) the user may be billed, as a result of at least one of the following criteria:
- time
- volume
- number of accesses
- services used
- type of data packet
- transfer quality

18. Method according to one of the preceding claims, **characterised in that** due to the information collected during routing in the network node (SG), the service provider may be billed, as a result of at least one of the following criteria:
- time
- volume
- number of accesses
- services used
- type of data packets
- transfer quality.

19. Device for routing data packets in an IP data network or in a network made up of communication and/or IP data networks (SG),
- with means (RE) for receiving, processing and routing the data packets (IP) and
- with means for storing additional information about the users and/or services available in the networks (UMS), and
- with means for storing management information (Service Management Module), and
- with means for identifying the formation of logical processor names in network addresses and vice versa (DNS proxy server) and
- with means for implementing routing for each individual data packet (IP), using both the information identified from the data packet and the stored additional information (Routing Information Module),
at least one of the nodes passing through on the path (transfer point) being clearly fixed on this path, and
- with an interface (IF) for modifying the stored additional information.

20. Device according to claim 19, **characterised in that** a clear path is implemented at the fixed node (transfer point) by a virtual connection.

21. Device according to one of claims 19 or 20, **characterised in that** access is possible to a server which contains authentication data and/or access data and/or billing data (AAA, SMS).

22. Device according to one of claims 19 - 21, **characterised in that** an interface (IF) exists via which the stored additional information may be modified via the users and/or services available (http).

23. Device according to one of claims 19 - 22, **characterised by** a help facility for users which, when errors occur during access to a service in the network, sends a message with information about the error which has occurred to the user (http Helpdesk).

24. Device according to claim 23, **characterised in that** the help facility is designed such that when errors occur during access to a service an alternative service is provided.

25. Device according to one of claims 23 or 24, **characterised in that** the access facility and/or the help facility is implemented by a user interface.

26. Device according to claim 25, **characterised in that** the communication with the user interface takes place by means of a suitable protocol (http).

## Revendications

1. Procédé pour la détermination de voies d'acheminement de trafic dans un réseau de données IP (IP : Protocole Internet) ou un réseau constitué de réseaux de communication et de réseaux de données IP, dans lequel des paquets de données sont reçus d'un noeud de réseau (SG) dans le réseau, et à l'aide de premières informations contenues dans le paquet de données et par l'attribution de ces premières informations à des secondes informations, qui sont également à la disposition (DB) du noeud de réseau (SG), pour chaque paquet de données, le noeud de réseau (SG) définit individuellement un chemin passant par le réseau/les réseaux pour une adresse cible, dans lequel au moins l'un des noeuds de réseau traversés sur le chemin est défini clairement sur ce chemin sur la base de la seconde information, et le paquet de données est transmis au prochain noeud de réseau sur le chemin déterminé pour l'adresse cible.

2. Procédé selon la revendication 1,
**caractérisé en ce que**
le chemin déterminé du paquet de données allant du noeud de réseau (SG) au noeud (A-F) défini est défini clairement.

3. Procédé selon l'une quelconque des revendications précédentes,
**caractérisé en ce que**
à partir des informations contenues dans le paquet de données, au moins l'une des indications suivantes peut être déterminée :
- utilisateur (adresse source),
- adresse cible,
- prestataire de service (point de remise),
- qualité,
- coûts,
- sécurité
de la transmission souhaitée.

4. Procédé selon l'une quelconque des revendications précédentes,
**caractérisé en ce que**
l'adresse source et/ou l'adresse cible sont constituées de plusieurs composants d'adresse.

5. Procédé selon l'une quelconque des revendications précédentes,
**caractérisé en ce que**,
l'adresse cible contenue dans le paquet de données est erronée ou inconnue, et le paquet de données est envoyé à une instance spéciale dans le réseau et y est traité.

6. Procédé selon l'une quelconque des revendications précédentes,
**caractérisé en ce que**
le même noeud défini (point de remise) traversera les paquets réponses envoyés sur l'un des paquets de données transmis dans ce réseau de l'adresse source à l'adresse cible, et ce de l'adresse cible à l'adresse source.

7. Procédé selon l'une quelconque des revendications précédentes,
**caractérisé en ce que**
l'adresse source est modifiée par le noeud de réseau (SG) dans le paquet de données sur le trajet de l'adresse source à l'adresse cible.

8. Procédé selon la revendication 7,
**caractérisé en ce que**
dans un paquet réponse sur un paquet de données d'origine sur le trajet de l'adresse source (= adresse cible initiale) à l'adresse cible (= adresse source modifiée), le noeud de réseau inscrit l'adresse cible correcte, donc la modification initiale de l'adresse source est à nouveau annulée.

9. Procédé selon la revendication 6, 7 ou 8,
**caractérisé en ce que**
une méthode de Network Address Translation (NAT) est appliquée aux paquets de données.

10. Procédé selon l'une quelconque des revendications précédentes,
**caractérisé en ce que**
des adresses cibles se trouvent dans un second réseau de communication (Nb), qui peut être joint au moyen d'un ou de plusieurs points d'accès, à chaque fois seul l'un de ces points d'accès pouvant être utilisé à un moment donné.

11. Procédé selon l'une quelconque des revendications précédentes,
**caractérisé en ce que**
l'adresse cible est un service d'information (CP), auprès duquel un utilisateur a dû se signaler avant qu'il utilise celui-ci, et **en ce qu'**il peut utiliser à chaque fois plusieurs de ces services d'information à un moment donné.

12. Procédé selon l'une quelconque des revendications précédentes,
**caractérisé en ce que**
les paquets de données transmis sont codés.

13. Procédé selon l'une quelconque des revendications précédentes,
**caractérisé en ce que**,
pour une adresse source dans un stock de données central (DB), il existe des indications qui contiennent un état de base par rapport à l'autorisation d'utilisation de services présents dans le réseau.

14. Procédé selon l'une quelconque des revendications précédentes,
**caractérisé en ce que**,
un utilisateur n'est pas autorisé à utiliser un service présent dans le réseau (CP, ISP) et lors de l'envoi d'un paquet de données de l'utilisateur non autorisé, ce paquet de données est envoyé à une instance spéciale qui génère un message d'erreur approprié.

15. Procédé selon l'une quelconque des revendications précédentes,
**caractérisé en ce que**
un utilisateur n'est pas autorisé à utiliser un service (CP, ISP) présent dans le réseau, et lors de l'envoi d'un paquet de données de l'utilisateur non autorisé, un message d'erreur approprié est généré et est retourné à l'utilisateur.

16. Procédé selon l'une quelconque des revendications précédentes,
**caractérisé en ce que**
un utilisateur est autorisé à utiliser un service présent dans le réseau et n'est cependant pas enregistré auprès de ce service et lors de l'envoi d'un paquet de données de l'utilisateur non enregistré, ce paquet de données est envoyé à une instance spéciale dans le réseau qui génère un message d'erreur approprié.

17. Procédé selon l'une quelconque des revendications précédentes,
**caractérisé en ce que**,
sur la base des informations collectées lors du choix du routage dans le noeud de réseau (SG), on peut effectuer une taxation de l'utilisateur, sur la base d'au mois l'un des critères suivants :
- temps
- volume
- nombre des accès
- services utilisés
- nature des paquets de données
- qualité de transmission.

18. Procédé selon l'une quelconque des revendications précédentes,
**caractérisé en ce que**,
sur la base des informations collectées lors du choix du routage dans le noeud de réseau (SG), on peut effectuer une taxation du prestataire de services, sur la base d'au moins l'un des critères suivants :
- temps
- volume
- nombre des accès
- services utilisés
- nature des paquets de données
- qualité de transmission.

19. Dispositif pour la détermination du routage pour des paquets de données dans un réseau de données IP ou dans un réseau constitué de réseaux de communication et/ou de réseaux de données IP (SG),
- avec des moyens (RE) pour la réception, le traitement et l'acheminement des paquets de données (IP), et
- avec des moyens pour le stockage d'informations supplémentaires sur les utilisateurs et/ou les services présents dans les réseaux (UMS), et
- avec des moyens pour le stockage d'informations de gestion (Service Management Module), et
- avec des moyens pour la détermination de la reproduction de noms d'ordinateurs logiques dans des adresses de réseau et inversement (DNS Proxy Server), et
- avec des moyens pour faire un choix de routage pour chaque paquet de données (IP) individuel, à l'aide aussi bien des informations déterminées à partir du paquet de données qu'à l'aide des informations supplémentaires stockées (Routing Information Module),
au moins l'un des noeuds (point de remise) parcourus sur le chemin étant clairement défini sur ce chemin, et
- avec une interface (IF) pour la modification des informations supplémentaires stockées.

20. Dispositif selon la revendication 19,
**caractérisé en ce que**
un chemin clair pour le noeud défini (point de transfert) est réalisé par une liaison virtuelle.

21. Dispositif selon l'une quelconque des revendications 19 ou 20,
**caractérisé en ce que**
un accès est possible à un serveur, qui contient des données d'authentification et/ou des données d'accès et/ou des données de taxation (AAA, SMS).

22. Dispositif selon l'une quelconque des revendications 19 à 21,
**caractérisé en ce que**
une interface (IF) existe, par laquelle les informations supplémentaires stockées concernant des utilisateurs et/ou des services présents (http) peuvent être modifiées.

23. Dispositif selon l'une quelconque des revendications 19 à 22,
**caractérisé par**
une possibilité d'aide pour des utilisateurs qui envoie à l'utilisateur, en cas d'apparition d'erreurs pendant l'accès à un service dans le réseau, un message avec des informations sur l'erreur survenue (http Helpdesk).

24. Dispositif selon la revendication 23,
**caractérisé en ce que**
la possibilité d'aide est conçue de telle sorte que, en cas d'apparition d'erreurs pendant l'accès à un service, un service alternatif est proposé.

25. Dispositif selon l'une quelconque des revendications 23 ou 24,
**caractérisé en ce que**
la possibilité d'accès et/ou la possibilité d'aide est réalisée par une interface utilisateur.

26. Dispositif selon la revendication 25,
**caractérisé en ce que**
la communication avec l'interface utilisateur s'effectue au moyen d'un protocole approprié (http).
